# EUROPÄISCHE PATENTANMELDUNG

(11) **EP 1 180 386 A1**
(43) Veröffentlichungstag der Anmeldung: **20.02.2002**
(21) Anmeldenummer: 01118813.3
(22) Anmeldetag: 10.08.2001
(51) Int. Cl.: B01D 11/02

(54) **Vorrichtung und Verfahren zur Extraktion**

(30) Priorität: 19.08.2000 DE 10040678
(71) Anmelder: MESSER GRIESHEIM GMBH, 60547 Frankfurt (DE)
(72) Erfinder: Berger, Thomas, 45219 Essen (DE); Lingler, Klaus, 41238 Mönchengladbach (DE); Woitzik, Norbert, 47803 Krefeld (DE)

(57) **Zusammenfassung**

Extraktionen erfolgen in der Regel in zylindrischen Behältern, in denen eine Schüttung der extrahierenden Substanzen in axialer Richtung von einem Lösungsmittel (Extraktionsfluid) durchströmt werden. In Verlauf der Extraktion kann es zu Verdichtungen der Schüttung kommen, mit der Folge, dass deren Durchlässigkeit für das Extraktionsfluid immer geringer wird und die Extraktion schließlich abgebrochen werden muss.

Erfindungsgemäß ist vorgesehen, in einem zylindrischen Extraktionsbehälter das Extraktionsfluid in radialer Richtung durch die Schüttung zu führen. Die erfindungsgemäße Vorrichtung west dazu ein vorzugsweise sich zentral durch den Extraktionsbehälter hindurcherstreckende Eintrageinrichtung für das Extraktionsfluid, etwa ein mit Öffnungen versehenes Eintragsrohr, sowie eine Auffangeinrichtung im Bereich des Zylindermantels des Behälters auf. Die Auffangeinrichtung besteht beispielsweise in einer mit Filtermitteln versehenen porösen Auskleidung der Zylinderwand, die mit einer Entnahmeleitung für das mit gelösten Stoffen angereicherte Extraktionsfluid in Strömungsverbindung steht.

Bei der Erfindung wird die Querschnittsbelastung, d.h. die Belastung der Schüttung in axialer Richtung, und damit die Verpressung der Schüttung deutlich reduziert.

## Beschreibung

Die Erfindung betrifft eine Vorrichtung sowie ein Verfahren zur Extraktion.

Als Extraktion wird ein Verfahren zum Trennen von Substanzgemischen bezeichnet, bei dem ein Bestandteil des Substanzgemisches in einem Lösungsmittel, hier im folgenden Extraktionsfluid genannt, gelöst wird. In einer anschließenden Separationsphase wird der gelöste Bestandteil aus dem Lösungsmittel gewonnen und steht in reiner Form wieder zur Verfügung. Beim Extraktionsfluid kann es sich um eine flüssige oder gasförmige Substanz oder um ein überkritischen Gas handeln.

Extraktionen erfolgen in der Regel in zylindrischen Behältern, die mit einer Schüttung aus dem zu extrahierenden Substanzgemisch befüllt werden. Die Behälter weisen an ihren Stirnseiten jeweils Anschlüsse zum Zuführen von Extraktionsfluid bzw. zum Ableiten von mit gelösten Stoffen beladenen Extraktionsfluid auf. Während der Extraktion wird die Schüttung wird aus diesem Grunde im Behälter in axialer Richtung vom Extraktionsfluid durchströmt. Längs der Schüttung entsteht dabei eine Druckdifferenz, die durch den Strömungswiderstand verursacht wird, den die Schüttung dem Fluss des Extraktionsfluids entgegensetzt. Das durch die Schüttung geführte Extraktionsfluid führt zu einer Verdichtung der Schüttung, die dadurch im Laufe des Extraktionsvorgangs immer undurchlässiger für das Extraktionsfluid wird. Der Strömungswiderstand der Schüttung kann so stark erhöht werden, dass in extremen Fällen die Extraktion sogar abgebrochen werden muss.

Bei einigen Materialien kann der Strömungswiderstand durch eine geeignete Vorbehandlung, wie etwa eine Pelletierung der zu extrahierenden Substanz verringert werden. Eine derartige Vorbehandlung ist jedoch bei einigen Materialien, wie etwa bei Metallschleifschlämmen, Bleicherden oder einigen Gewürzen, nicht möglich; zudem führt die Pelletierung zu längeren Extraktionsdauern.

Aufgabe der vorliegenden Erfindung ist es, die Verpressung der Schüttung im Verlauf einer Extraktion zu vermindern.

Gelöst ist diese Aufgabe durch eine Vorrichtung mit den Merkmalen des Patentanspruchs 1.

Bei der erfindungsgemäßen Vorrichtung erfolgt die Durchleitung des Extraktionsfluids durch den Extraktionsbehälter also nicht, wie beim Stand der Technik, in axialer Richtung, sondern zumindest teilweise quer zur Längserstreckung des Extraktionsbehälters. Erreicht wird dies dadurch, dass sich eine Eintragsvorrichtung über zumindest einen Teil der axialen Länge des Extraktionsbehälters erstreckt. Die Eintragseinrichtung ist dabei mit Zuströmöffnungen versehen, aus denen das Extraktionsfluid in einer im wesentlichen quer zur Längserstreckung des Behälters verlaufenden Richtung durch die Schüttung strömen kann. Der Strömungsweg des Extraktionsfluids durch die zu extrahierenden Substanzen ist somit gegenüber dem Stand der Technik wesentlich verkürzt und die Verpressung der Schüttung ist deutlich reduziert.

Vorteilhafterweise umfasst die Eintragseinrichtung ein Eintragsrohr, das sich über zumindest einen Teil der axialen Länge des Extraktionsbehälters, beispielsweise entlang der zentralen Achse des zylinderförmigen Behälters, erstreckt, und dessen Wänden zumindest teilweise für das Extraktionsfluid durchlässig sind. Zur Gewährleistung der Durchlässigkeit können die Wände entweder aus einem porösen Material gefertigt oder mit geeigneten Öffnungen versehen sein.

Zur Aufnahme des mit gelösten Stoffen angereicherten Extraktionsfluids ist zweckmäßigerweise eine Auffangeinrichtung vorgesehen, die sich im Innern des Extraktionsbehälters über zumindest einen Teil von dessen axialer Länge erstreckt und die mit Strömungsöffnungen versehen ist, die mit der Ausleitung für das angereicherte Extraktionsfluid versehen sind.

Eine besonders vorteilhafte Auffangeinrichtung umfasst eine im Bereich des Zylindermantels des Extraktionsbehälters angeordnete poröse Auskleidung, die für das mit gelösten Stoffen angereicherte Extraktionsfluid durchlässig ist. Als "poröse Auskleidung" kann beispielsweise ein poröses Material zum Einsatz kommen, das an der Innenseite der Zylinderwand oder von Teilen davon angeordnet ist, oder es kann eine Beschichtung oder eine Zwischenwand vorgesehen sein, die mit geeigneten künstlichen Öffnungen für das Extraktionsfluid versehen ist.

Um zu verhindern, dass nicht im Extraktionsfluid gelöste Bestandteile der Schüttung in die poröse Auskleidung eindringen und im Laufe der Zeit deren Fähigkeit, vom Extraktionsfluid durchströmt zu werden, beeinträchtigen, ist in einer vorteilhaften Ausgestaltung der Erfindung vorgesehen, der Auskleidung entsprechende Filtermittel zuzuordnen.

Als vorteilhaftes Filtermittel ist ein Filtergewebe vorgesehen, das zwischen der Auskleidung und der Schüttung angeordnet ist. Das Filtergewebe kann beispielsweise ein Tressengewebe aus feinen Metall- oder Kunststoff-Fäden sein, dessen Maschen den jeweiligen Anforderungen an die Filterfeinheit angepasst sind.

Alternativ zur vorgenannten Ausführungsform einer Auffangeinrichtung mit einer im Bereich des Zylindermantels des Extraktionsbehälters aufgenommenen Auskleidung ist eine Auffangeinrichtung vorgesehen, die einen im Innern des Extraktionsbehälters angeordneten Filterkorb umfasst. Der Filterkorb nimmt die Schüttung des zu extrahierenden Substanzgemisches auf, wobei die Korbwände derart aufgebaut sind, dass sie für das mit gelösten Stoffen angereicherte Extraktionsfluid durchlässig sind. Zwischen der Innenwand des Extraktionsbehälters und der Außenseite des Filterkorbs ist zugleich ein Strömungsweg für das mit gelösten Stoffen angereicherte Extraktionsfluid vorgesehen, der wiederum mit der Ausleitung in Strömungsverbindung steht.

In einer weiterführenden und besonders zweckmäßigen Ausgestaltung der vorgenannten Ausführungsform wird der Strömungsweg für das aus dem Filterkorb abströmende Extraktionsfluid dadurch hergestellt, dass zwischen der Außenwand des Filterkorbs und der Innenwand des Extraktionsbehälters eine Beabstandung vorgesehen ist. Die Beabstandung entspricht vorzugsweise einem Ringspalt zwischen Filterkorb und Behälterwand; es ist jedoch auch vorstellbar, dass der Filterkorb über einen gewissen Abschnitt seines Außenumfangs an der Behälterwand anliegt.

Besonders vorteilhaft ist die Ausgestaltung der Eintrageinrichtung und/oder der Auffangeinrichtung für das Extraktionsfluid als Nachrüstsatz in bestehende Extraktionsanlagen.

Die erfindungsgemäße Aufgabe wird auch durch ein Verfahren mit den Merkmalen des Patentanspruchs 10 gelöst.

Beim erfindungsgemäßen Verfahren wird der bei konventionellen Verfahren axiale Verlauf des Strömungsweges des Extraktionsfluids durch die Schüttung hindurch durch einen im wesentlichen radialen Verlauf ersetzt. Auf diese Weise wird bei üblichen Behältergeometrien, bei denen die Länge des zylindrischen Behälters größer als seine Breite ist, die effektive Filterfläche deutlich vergrößert. Auf diese Weise wird die Querschnittsbelastung, also die Menge des pro Flächeneinheit durch den Behälter strömenden Extraktionsfluids reduziert und dadurch die Verpressung der Schüttung vermindert.

Als bevorzugtes Extraktionsfluid kommt beim erfindungsgemäßen Verfahren ein überkritisches Gas, etwa überkritisches Kohlendioxid, zum Einsatz. Im überkritischen Zustand besitzt ein Stoff hervorragende Lösungseigenschaften sowie eine niedrige Viskosität.

Besonders vorteilhaft ist die Verwendung der erfindungsgemäßen Vorrichtung bzw. des erfindungsgemäßen Verfahrens bei der Hochdruck-Extraktion, insbesondere bei der Hochdruck-Extraktion von Schleifschlämmen.

Anhand der Zeichnungen soll nachfolgend ein Ausführungsbeispiel der Erfindung näher erläutert werden.

In schematischen Ansichten zeigen:
- Fig. 1: eine Hochdruck-Extraktionsanlage mit einer Extraktionsvorrichtung in einem Blockschaltbild und
- Fig. 2: die Extraktionsvorrichtung der Anlage aus Fig. 1 im Längsschnitt.

Die Hochdruck-Extraktion ist ein Verfahren zur Trennung von SubstanzGemischen, wobei für die Extraktion als Lösungsmittel Gase unter hohen Drücken eingesetzt werden. Das Verfahren ist an sich bekannt und beispielsweise in dem Aufsatz "Hochdruck-Extraktion ― ein neues Anwendungsgebiet für technische Gase und Kohlendioxid" gas aktuell 24, S.3 (1982) ausführlich beschrieben.

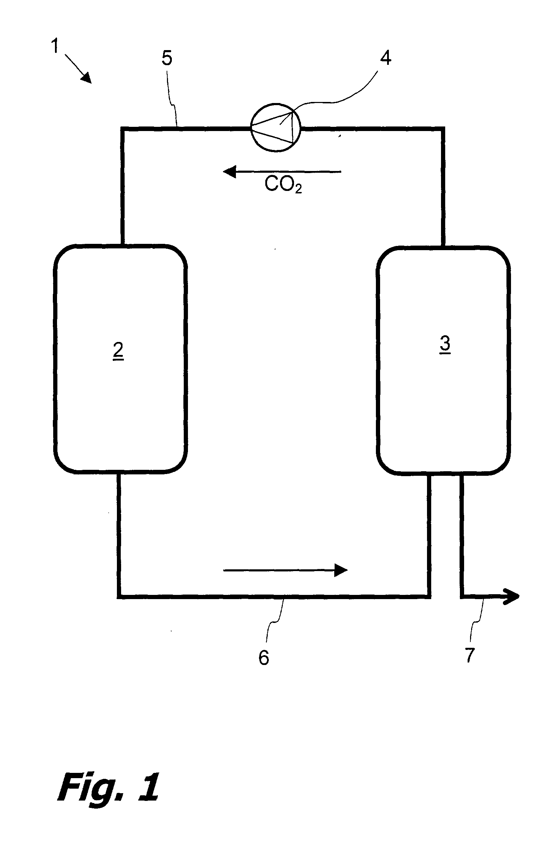

Die in Fig. 1 gezeigte Anlage 1 zur Hochdruck-Extraktion, beispielsweise von Metall-Schleifschlämmen, weist zwei Autoklaven, die Extraktionsvorrichtung 2 und den Separator 3 auf, durch die ein Extraktionsfluid, im Ausführungsbeispiel Kohlendioxid, im Kreis geführt wird. Das durch eine Zuführleitung 5 vom Separator 3 in die Extraktionsvorrichtung 2 herangeführte Extraktionsfluid wird mittels eines Druckerzeugers 4 auf einem vorgegebenen Druck gebracht und durchläuft anschließend eine in der Extraktionsvorrichtung 2 zuvor eingegebene Schüttung aus einem zu trennenden Substanzgemisch. Bevorzugt befindet sich dabei das als Extraktionsfluid eingesetzte Kohlendioxid im überkritischen Zustand, in dem besonders gute Lösungseigenschaften vorliegen. Das Extraktionsfluid nimmt lösbare Bestandteile des Substanzgemisches auf und führt sie über eine Abströmleitung 6 dem Separator 3 zu. Im Separator 3 wird die gelöste Substanz vom Extraktionsfluid getrennt. Die Trennung kann dabei beispielsweise durch eine Dichteänderung der Lösung, die durch eine Änderung von Druck und/oder Temperatur herbeigeführt wird, durch Entspannen der Lösung auf unterkritische Bedingungen, durch Adsorption der gelösten Substanz an geeigneten, im Separator 3 befindlichen Adsorbermaterialien oder durch Kombination dieser Verfahren erfolgen. Das Extraktionsfluid wird im Separator 3 weitgehend von der zu lösenden Substanz befreit und steht einer erneuten Zuführung an die Extraktionsvorrichtung 2 zur Verfügung. Die aus dem Extraktionsfluid herausgelösten Substanzen werden über eine Extraktentnahmeleitung 7 der Weiter- oder Wiederverwertung zugeführt.

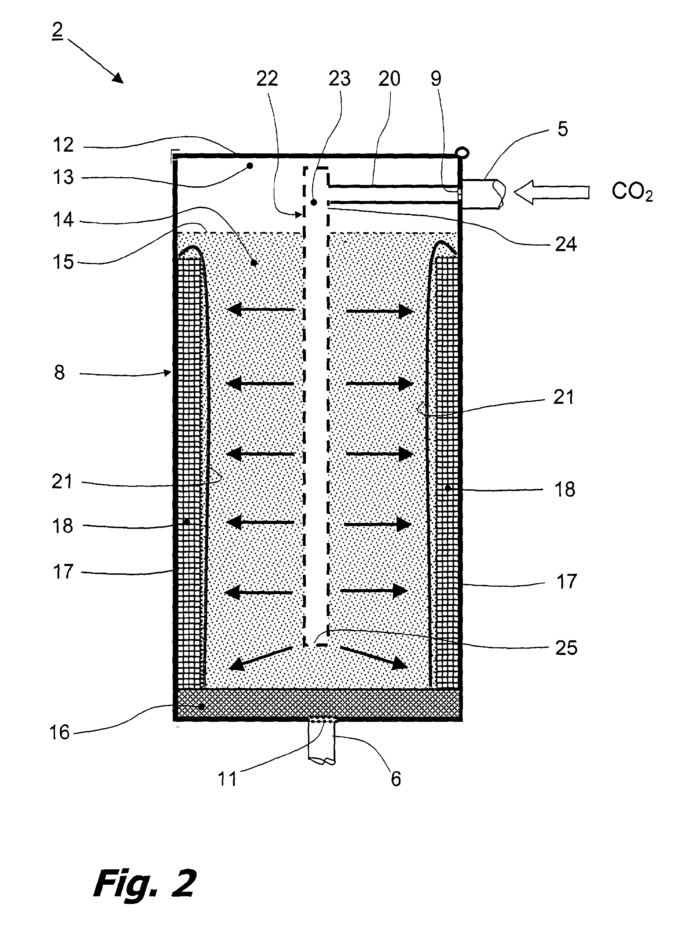

Die in Fig. 2 im Längsschnitt dargestellte Extraktionsvorrichtung 2 umfasst einen zylinderförmigen Druckbehälter 8 mit einer Einlassöffnung 9 und einer Auslassöffnung 11 zum Zuführen bzw. Abführen von Extraktionsfluid. Die Einlassöffnung 9 ist mit der Zuströmleitung 5, die Auslassöffnung 11 mit der Abströmleitung 6 strömungsverbunden.

Im oberen Bereich des Druckbehälters 8 befindet sich ein Deckel 12, mittels dessen eine Einfüllöffnung 13 druckfest verschließbar ist. Die Einfüllöffnung 13 dient zum Befüllen des Druckbehälters 8 mit einer Schüttung 14 aus einem zu trennenden Substanzgemisch, beispielsweise einem stark ölhaltiger Metall-Schleifschlamm.

In unteren Bereich des Druckbehälters 8 ist eine Sinterscheibe 16 angeordnet. Bei der Sinterscheibe 16 handelt es sich beispielsweise um eine Metallscheibe mit eingearbeiteten Poren vorgegebenen Öffnungsdurchmessers oder um eine Scheibe aus porösem Material. Die Öffnungsdurchmesser der Poren der Sinterscheibe 16 sind so gewählt, dass das mit gelösten Stoffen angereicherte Extraktionsfluid durch die Poren hindurchströmen kann, nicht jedoch solche festen Bestandteile der Schüttung 14, die im Extraktionsfluid unlösbar sind.

Im Bereich der Mantelwand 17 des zylindrischen Druckbehälters 8 ist innenseitig ringsumlaufend eine Auskleidung 18 vorgesehen. Die der Sinterscheibe 16 unmittelbar aufgesetzte Auskleidung 18 besteht aus porösem Material, das so ausgebildet ist, dass es für mit gelösten Stoffen angereichertes Extraktionsfluid durchlässig ist. Beispielsweise handelt es sich bei dem Material der Auskleidung 18 um ein Maschengewebe aus Metalldraht. Die Auskleidung 18 erstreckt sich, ausgehend von der Sinterscheibe 16, über einen Großteil der Längserstreckung des Druckbehälters 8, endet jedoch unterhalb der bestimmungsgemäßen Schütthöhe 15 der Schüttung 14. Behälterinnenseitig ist die Auskleidung 18 mit einem Filtergewebe 21 vollständig bedeckt. Das beispielsweise aus einem feinen, metallischen Tressengewebe bestehende Filtergewebe 21 ist- ähnlich wie die Sinterscheibe 16 - für Extraktionsfluid, das mit gelösten Stoffen angereichert ist, durchlässig, nicht jedoch für nicht in dem Extraktionsfluid lösbare feste Bestandteile der Schüttung.

Entlang der zentralen Achse des Druckbehälters 8 erstreckt sich ein Eintragsrohr 22, dessen zentrale Bohrung 23 über ein Verbindungsstück 20 mit der Einfüllöffnung 9, und damit mit der Zuleitung 5, in Strömungsverbindung steht. Die Rohrwand ist über die gesamte Länge des Eintragsrohrs 22 in vorbestimmten Abständen mit Strömungsöffnungen 24 versehen. Zugleich ist die der Sinterscheibe 16 zugewandte Stirnseite 25 des Eintragsrohrs 22 mit einer Stirnplatte versehen, die gleichfalls mit Strömungsöffnungen versehen ist. Das Eintragsrohr 22 erstreckt sich über fast die gesamte Länge des Druckbehälters 8, endet jedoch mit seiner Stirnseite 25 in einen vorbestimmten Abstand, beispielsweise der Hälfte bis zu einem Achtel der Gesamtlänge des Druckbehälters, vor der Sinterplatte 16.

Beim bestimmungsgemäßen Einsatz des Extraktors 2 strömt ein Extraktionsfluid, beispielsweise überkritisches Kohlendioxid, aus der Zuleitung 5 in das Eintragsrohr 22 und anschließend über die Strömungsöffnungen 24 in die Schüttung 14 ein. Zugleich steht die Auskleidung 18 mit der Sinterscheibe 16, und damit der Abströmleitung 6 in Strömungsverbindung. Beim Durchströmen des Extraktionsfluids bildet die Schüttung 14 zwischen dem Eintragsrohr 22 und der Auskleidung 18 einen Strömungswiderstand, über den sich ein Druckgefälle einstellt. Der Gradient dieses Druckgefälles, und damit der bevorzugte Strömungsweg, verläuft dabei - zumindest über einen Großteil der Längserstreckung des Druckbehälters 2 - in im wesentlichen radialer Richtung, wie dies in der Zeichnung durch Pfeile angedeutet ist. Durch die vorher beschriebene Begrenzung der Höhe der Auskleidung 18 sowie durch die Beabstandung der Stirnseite des Eintragsrohrs 22 von der Sinterscheibe 16 wird dabei verhindert, dass sich in der Strömung des Extraktionsfluids zwischen dem Eintragsrohr 22 und der Auskleidung 18 bzw. der Sinterscheibe 16 ein Kurzschluss bildet.

Alternativ zu den vorgenannten Ausgestaltungen kann das Eintragsrohr 22 auch bis an die Sinterscheibe 16 herangeführt werden. Zur Vermeidung eines Strömungskurzschlusses ist diesem Fall ist entweder das Eintragsrohr in seinem der Sinterscheibe 16 zugewandten Endabschnitt strömungsdicht abgeschlossen, oder die Sinterscheibe ist in einem an die Stirnseite 25 des Eintragsrohrs angrenzenden Bereich abgedichtet. Es kann auch auf die Sinterscheibe 16 völlig verzichtet und die Auskleidung 18 unmittelbar strömungstechnisch mit der Abströmleitung verbunden werden.

In einer anderen Alternative erstreckt sich die Auskleidung 18 über die volle Länge der Mantelwand, also bis zur Einlassöffnung 13; dies setzt jedoch zur Vermeidung eines Strömungskurzschlusses voraus, dass die Rohrwand des Eintragsrohrs 22 erst in einem Bereich unterhalb der bestimmungsgemäßen Schütthöhe 15 der Schüttung 14 mit Strömungsöffnungen 24 versehen ist.

Im Unterschied zu konventionellen Extraktoren, bei denen weder eine im Bereich der Mantelwand 17 angeordnete Auskleidung 18, noch ein zentrales Eintragsrohr 22 vorhanden ist, und bei denen sich demzufolge ein Druckgradient in axialer Richtung eines zylinderförmigen Behälters ausbildet, verläuft der Druckgradient nach der Erfindung also zumindest teilweise in radialer Richtung, wobei ein Großteil der Fläche der Mantelwand 17 als Filterfläche zur Verfügung steht. Bei gleicher Größe des Behälters und einem Durchmesser-Längen-Verhältnis des Behälters von 1:5 kann die Filterfläche so um bis zu einen Faktor Zwanzig vergrößert werden. Dadurch reduziert sich während der Extraktion die sogenannte Querschnittsbelastung, also die Menge an Extraktionsfluid, das eine Flächeneinheit der Schüttung durchströmt, und die Verpressung der Schüttung wird wesentlich reduziert. Die Erfindung ist im übrigen nicht auf Hockdruck-Extraktionsvorrichtungen beschränkt; vielmehr ist sie bei allen Extraktionsverfahren, die in im wesentlichen zylindrischen Behältern durchgeführt werden, einsetzbar.

Die erfindungsgemäße Extraktionsvorrichtung 2 ermöglicht die problemlose Extraktion von Substanzgemischen, bei denen eine Extraktion bislang nicht oder nur nach einer aufwendigen Vorbehandlung durchgeführt werden konnte. Durch Einbau einer geeigneten Auskleidung 18, eines Filtergewebes 21 sowie eines Eintragrohrs 22 können auch bestehende Extraktoren leicht und ohne allzu großen materiellen und finanziellen Aufwand zu einem erfindungsgemäßen Extraktor 2 umgerüstet werden.

### Bezugszeichenliste

- 1.: Anlage zur Hochdruck-Extraktion
- 2.: Extraktionsvorrichtung
- 3.: Separator
- 4.: Druckerzeuger
- 5.: Zuleitung
- 6.: Abströmleitung
- 7.: Extraktentnahmeleitung
- 8.: Druckbehälter
- 9.: Einlassöffnung
- 10.: -
- 11.: Auslassöffnung
- 12.: Deckel
- 13.: Einfüllöffnung
- 14.: Schüttung
- 15.: bestimmungsgemäße Schütthöhe
- 16.: Sinterscheibe
- 17.: Mantelwand
- 18.: Auskleidung
- 19.: -
- 20.: Verbindungsstück
- 21.: Filtergewebe
- 22.: Eintragsrohr
- 23.: zentrale Bohrung
- 24.: Strömungsöffnungen
- 25.: Stirnseite

## Patentansprüche

1. Extraktionsvorrichtung mit einem im wesentlichen zylinderförmigen Extraktionsbehälter (8) zur Aufnahme einer Schüttung (14) aus einem zu extrahierenden Substanzgemisch sowie mit einer Zuleitung (5) für ein Extraktionsfluid und mit einer Ausleitung (6) für das mit gelösten Stoffen angereicherte Extraktionsfluid,
**dadurch gekennzeichnet,**
**dass** die Zuleitung (5) für das Extraktionsfluid mit einer Eintrageinrichtung (22) strömungsverbunden ist, die sich über zumindest einen Teil der axialen Länge des Extraktionsbehälters (8) erstreckt und die mit Zuströmöffnungen (24) zur Ausbildung von zumindest teilweise quer zur Längserstreckung des Extraktionsbehälters (8) verlaufenden Strömungswegen des Extraktionsfluids versehen ist.

2. Vorrichtung nach Anspruch 1, **dadurch gekennzeichnet, dass** die Eintragseinrichtung ein sich über zumindest einen Teil der axialen Länge des Extraktionsbehälters (8) durch diesen hindurcherstreckendes Eintragsrohr (22) umfasst, dessen Wände zumindest teilweise für das Extraktionsfluid durchlässig sind.

3. Vorrichtung nach Anspruch 1 oder 2, **gekennzeichnet durch** eine im Innern des Extraktionsbehälters (8) angeordnete Auffangeinrichtung (18) für das mit gelösten Stoffen angereicherte Extraktionsfluid, die sich über zumindest einen Teil der axialen Länge des Extraktionsbehälters (8) erstreckt und die mit der Ausleitung (6) strömungsverbunden ist.

4. Vorrichtung nach Anspruch 3, **dadurch gekennzeichnet, dass** die Auffangeinrichtung eine im Bereich des Zylindermantels (17) des Extraktionsbehälters (8) angeordnete, poröse Auskleidung (18) umfasst, die für das mit gelösten Stoffen angereicherte Extraktionsfluid durchlässig ist.

5. Vorrichtung nach Anspruch 4, **dadurch gekennzeichnet, dass** der Auskleidung (18) Filtermittel (21) zugeordnet sind, die das Eindringen von ungelösten Stoffen aus der Schüttung (14) unterbinden.

6. Vorrichtung nach Anspruch 5, **dadurch gekennzeichnet, dass** als Filtermittel ein zwischen Schüttung (14) und Auskleidung (18) angeordnetes Gewebe, etwa ein Tressengewebe (21), vorgesehen ist.

7. Vorrichtung nach Anspruch 3, **dadurch gekennzeichnet, dass** die Auffangeinrichtung einen im Extraktionsbehälter (8) angeordneten Filterkorb zur Aufnahme der Schüttung (14) umfasst, dessen Wände für das mit gelösten Stoffen angereicherte Extraktionsfluid durchlässig sind, und dass zwischen einer Außenwand des Filterkorbs und dem Zylindermantel (17) des Extraktionsbehälters (8) ein mit der Ausleitung (6) strömungsverbundener Strömungsweg für das Extraktionsfluid vorgesehen ist.

8. Vorrichtung nach Anspruch 7, **dadurch gekennzeichnet dass** der Strömungsweg für das Extraktionsfluid durch eine Beabstandung des Filterkorbs von der Innenwand des Extraktionsbehälters (8) hergestellt wird.

9. Vorrichtung nach einem der vorhergehenden Ansprüche, **dadurch gekennzeichnet, dass** die Eintrageinrichtung (22) und/oder die Auffangeinrichtung (18) als Nachrüstsatz für bestehende Extraktionsanlagen ausgebildet ist/sind.

10. Extraktionsverfahren, bei dem ein im wesentlichen zylinderförmiger Extraktionsbehälter (8) mit einer Schüttung (14) eines zu extrahierenden Substanzgemisches gefüllt und die Schüttung (14) anschließend mit einem Extraktionsfluid durchströmt wird, wobei im Extraktionsfluid Stoffe aus dem Substanzgemisch gelöst werden,
**dadurch gekennzeichnet,**
**dass** die Strömung des Extraktionsfluids zumindest teilweise im wesentlichen radial nach außen durch die Schüttung im Extraktionsbehälter (8) geführt wird.

11. Verfahren nach Anspruch 10, **dadurch gekennzeichnet, dass** als Extraktionsfluid im Extraktionsbehälter (8) ein überkritisches Gas, etwa überkritisches Kohlendioxid zum Einsatz kommt.

12. Verwendung der Extraktionsvorrichtung (2) nach Anspruch 1 bis 9 und/oder des Verfahrens nach Anspruch 10 oder 11 für die Hochdruck-Extraktion, insbesondere für die Hochdruck-Extraktion von Schleifschlämmen.
